# EUROPEAN PATENT SPECIFICATION

(11) **EP 4 117 068 B1**
(45) Date of publication and mention of the grant of the patent: **01.07.2026**
(21) Application number: 22180155.8
(22) Date of filing: 21.06.2022
(51) Int. Cl.: H01M 10/04, H01M 50/264, H01M 50/103, H01M 50/209, H01M 50/224, H01M 50/233, H01M 50/291

(54) **POWER STORAGE MODULE AND POWER STORAGE PACK**
ENERGIESPEICHERMODUL UND ENERGIESPEICHERPAKET
MODULE DE STOCKAGE D'ÉNERGIE ET PACK DE STOCKAGE D'ÉNERGIE

(30) Priority: 06.07.2021 JP 2021112113
(43) Date of publication of application: 11.01.2023
(73) Proprietor: Prime Planet Energy & Solutions, Inc., Tokyo 103-0022 (JP)
(72) Inventor: OMURA, Tetsuji, Tokyo, 103-0022 (JP)
(74) Representative: Kuhnen & Wacker Patent- und Rechtsanwaltsbüro PartG mbB

(56) References cited:
- EP-A1- 3 780 140
- JP-A- 2013 025 983
- JP-A- 2021 082 439
- US-A1- 2014 356 659
- US-A1- 2019 006 644

## Description

### BACKGROUND OF THE INVENTION

### Field of the Invention

The present invention relates to a power storage module and a power storage pack.

### Description of the Background Art

Japanese Patent Application JP 2011-134699 A is a prior art document that discloses a configuration of a battery module. The battery module described in JP 2011-134699 A includes a battery unit, an end plate, and a fixation band. In the battery unit, a plurality of batteries are connected. The end plate is installed at an end portion of the battery unit. The fixation band surrounds and fixes an assembly of the battery unit and the end plate. The fixation band is contracted after thermal expansion and tightens the battery unit and the end plate. The fixation band includes a coupling portion obtained by coupling both ends thereof to each other to form a closed-loop shape.

When a restraint member for a plurality of power storage cells has a connection portion, an operation of connecting the restraint member is required, and the connection portion is a portion with the weakest strength in the restraint member, with the result that restraint force obtained by the restraint member for the plurality of power storage cells is limited by the strength of the connection portion.

Further battery modules and methods for manufacturing such modules are known from US Patent Application US 2019/0006644 A1, US Patent Application US 2014/0356659 A1, Japanese Patent Application JP 2013-025983 A, European Patent Application EP 3 780 140 A1 and Japanese Patent Application JP 2021-082439 A.

### SUMMARY OF THE INVENTION

An object of the present invention is to provide a power storage module and a power storage pack to restrain a plurality of power storage cells with high restraint force by increasing strength of a restraint member while eliminating need of an operation of connecting the restraint member.

A power storage module according to a first aspect of the present invention as set forth in claim 1 includes a plurality of stacked power storage cells, a seamless loop-shaped metal member, a first spacer, a bus bar plate and a top cover. The seamless loop-shaped metal member surrounds and holds the plurality of power storage cells in a stacking direction. The first spacer is disposed between the seamless loop-shaped metal member and the plurality of power storage cells in the stacking direction. The seamless loop-shaped metal member includes a pair of first side portions extending in the stacking direction, and a pair of second side portions extending in a direction orthogonal to the stacking direction to connect the pair of first side portions to each other. Each of the plurality of power storage cells has a main surface having a rectangular shape constituted of a pair of long sides and a pair of short sides when viewed in the stacking direction. Each of the pair of second side portions is located in parallel with the pair of long sides when viewed in the stacking direction. At least one of the pair of second side portions is provided with a hole portion that extends through the at least one of the pair of second side portions in the stacking direction. The first spacer includes a first base portion extending in parallel with the pair of long sides and a plurality of first projecting portions projecting from the first base portion in parallel with the pair of short sides. The plurality of first projecting portions is located with a space being interposed between the plurality of first projecting portions, and the hole portion overlaps with the space when viewed in the stacking direction. Protuberances are formed on the upper surface of the first base portion. A plurality of functionally divided spaces is formed between the top cover and the bus bar plate. The bus bar plate is placed on the plurality of power storage cells and is positioned by inserting respective protuberances into through hole portions. The top cover is placed on the bus bar plate.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing an external appearance of a power storage module according to a first embodiment.
Fig. 2 is a perspective view showing a state of the power storage module according to the first embodiment with a top cover and a seamless loop-shaped metal member being removed.
Fig. 3 is a perspective view showing a configuration of a power storage cell.
Fig. 4 is a perspective view showing an external appearance of a side plate.
Fig. 5 is a perspective view showing an external appearance of the seamless loop-shaped metal member.
Fig. 6 is a plan view showing a configuration of the seamless loop-shaped metal member.
Fig. 7 is a perspective view showing an external appearance of a first spacer.
Fig. 8 is a perspective view showing an external appearance of the top cover.
Fig. 9 is a front view showing a state in which a pair of side plates are fitted on a plurality of power storage cells.
Fig. 10 is a cross sectional view showing a state in which the plurality of power storage cells on which the pair of side plates are fitted are inserted into the seamless loop-shaped metal member.
Fig. 11 is a cross sectional view when viewed in a direction of XI-XI of Fig. 10.
Fig. 12 is a cross sectional view showing a state in which the plurality of power storage cells are compressed in a stacking direction and the first spacer is inserted into a space between the seamless loop-shaped metal member and the plurality of power storage cells.
Fig. 13 is a cross sectional view showing a state in which pressing of the plurality of power storage cells by a cylinder is ceased.
Fig. 14 is a cross sectional view when viewed in a direction of arrows of a line XIV-XIV of Fig. 13.
Fig. 15 is a cross sectional view showing a state in which a bus bar plate is placed on the plurality of power storage cells.
Fig. 16 is a cross sectional view showing a state in which the top cover is placed on the bus bar plate.
Fig. 17 is a diagram showing a relation of engagement between a first spacer and a second spacer of a power storage module according to a modification of the present embodiment.
Fig. 18 is a plan view showing a configuration of a power storage pack according to a second embodiment.
Fig. 19 is a perspective view showing an external appearance of a case.
Fig. 20 is a perspective view showing a state in which a plurality of power storage cells are accommodated in the case.
Fig. 21 is a cross sectional view showing a state in which a first spacer is inserted into a space between the case and the plurality of power storage cells.
Fig. 22 is a perspective view showing a state in which a bus bar plate and a top cover are placed on the plurality of power storage cells.
Fig. 23 is a perspective view showing a state in which a case cover is attached to the case.
Fig. 24 is a perspective view showing an external appearance of a first spacer of a power storage pack according to a first modification of the present embodiment.
Fig. 25 is a perspective view showing a configuration of a first projecting portion of a first spacer of a power storage pack according to a second modification of the present embodiment.
Fig. 26 is a perspective view showing a configuration of a first projecting portion of a first spacer of a power storage pack according to a third modification of the present embodiment.

### DESCRIPTION OF THE PREFERRED EMBODIMENTS

Hereinafter, embodiments of the present invention will be described. It should be noted that the same or corresponding portions are denoted by the same reference characters, and may not be described repeatedly.

It should be noted that in the embodiments described below, when reference is made to number, amount, and the like, the scope of the present invention is not necessarily limited to the number, amount, and the like unless otherwise stated particularly. Further, in the embodiments described below, each component is not necessarily essential to the present invention unless otherwise stated particularly.

It should be noted that in the present specification, the terms "comprise", "include", and "have" are open-end terms. That is, when a certain configuration is included, a configuration other than the foregoing configuration may or may not be included. Further, the present invention is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate. The term "current collecting portion" may collectively represent a positive electrode current collecting member and a negative electrode current collecting member.

In the present specification, when the terms "power storage cell", "power storage module", and "power storage pack" are used, the "power storage cell", the "power storage module", and the "power storage pack" are not limited to a battery cell, a battery module, and a battery pack, and may include a capacitor cell and the like.

### (First Embodiment)

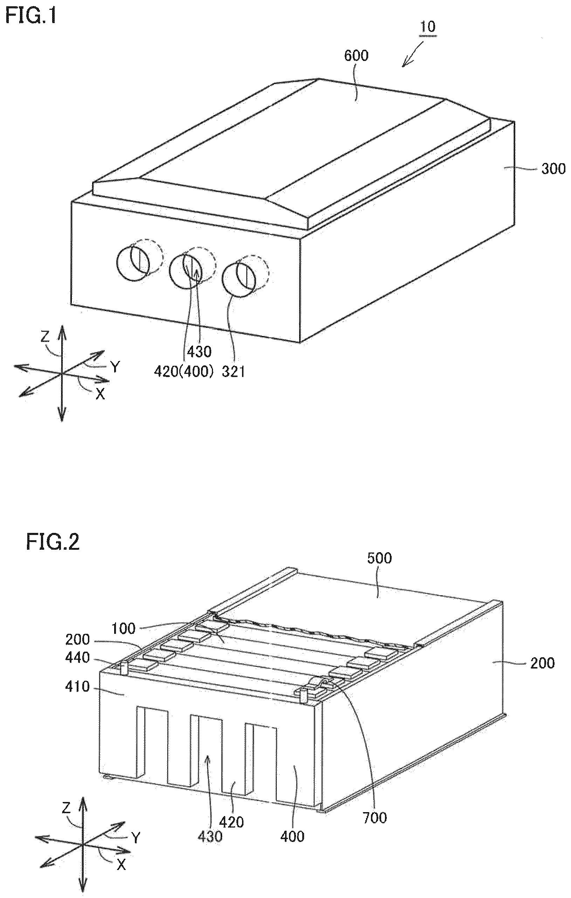

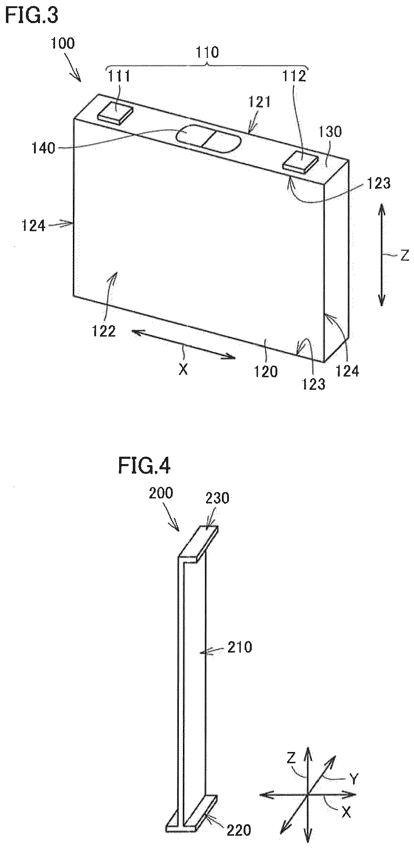

Fig. 1 is a perspective view showing an external appearance of a power storage module according to a first embodiment. Fig. 2 is a perspective view showing a state of the power storage module according to the first embodiment with a top cover and a seamless loop-shaped metal member being removed. Fig. 3 is a perspective view showing a configuration of a power storage cell.

As shown in Figs. 1 to 3, a power storage module 10 according to the first embodiment includes a plurality of stacked power storage cells 100, a seamless loop-shaped metal member 300, and a first spacer 400. Power storage module 10 further includes a pair of side plates 200, a bus bar plate 500, a top cover 600, and a bus bar 700. Power storage module 10 is a so-called battery pack.

As shown in Figs. 2 and 3, the plurality of power storage cells 100 are stacked side by side in a Y axis direction. Thus, a stack of power storage cells 100 is formed. A separator (not shown) is interposed between power storage cells 100.

As shown in Fig. 3, power storage cell 100 includes an electrode terminal 110, a housing, and a gas discharge valve 140. The housing is constituted of: an exterior package 120 provided with an opening 121; and a sealing plate 130 that seals opening 121.

The housing is formed to have a substantially rectangular parallelepiped shape. Specifically, the housing of each of the plurality of power storage cells 100 has a main surface 122 having a rectangular shape constituted of a pair of long sides 123 and a pair of short sides 124 when viewed in the Y axis direction (stacking direction). An electrode assembly (not shown) and an electrolyte solution (not shown) are accommodated in the housing. The outer surface of exterior package 120 may be covered with an insulating film (not shown).

Electrode terminal 110 includes a positive electrode terminal 111 and a negative electrode terminal 112. Electrode terminal 110 is formed on sealing plate 130. Gas discharge valve 140 is formed on sealing plate 130 at an intermediate position between positive electrode terminal 111 and negative electrode terminal 112. Gas discharge valve 140 is fractured when pressure in the housing becomes more than or equal to a threshold value. Thus, combustible gas in the housing is discharged to outside of the housing.

As shown in Fig. 2, electrode terminals 110 adjacent to each other in the Y axis direction (stacking direction) are electrically connected to each other by a bus bar 700. Thus, the plurality of power storage cells 100 are electrically connected to each other in series or in parallel.

Fig. 4 is a perspective view showing an external appearance of each side plate. As shown in Figs. 2 and 4, the pair of side plates 200 are disposed to sandwich the plurality of power storage cells 100 therebetween in a width direction (X axis direction) of power storage module 10.

Specifically, each of the pair of side plates 200 includes: a side wall portion 210 extending in the Y axis direction (stacking direction); a bottom plate portion 220 extending from the lower end of side wall portion 210 to both sides in the width direction (X axis direction); and a top plate portion 230 extending from the upper end of side wall portion 210 to one side in the width direction (X axis direction).

Side wall portion 210 is in contact with a side surface of exterior package 120 of each of the plurality of power storage cells 100. Bottom plate portion 220 is in contact with the bottom surface of exterior package 120 of each of the plurality of power storage cells 100. Top plate portion 230 is in contact with sealing plate 130 of each of the plurality of power storage cells 100. Side plate 200 is composed of a resin having insulation property and heat resistance.

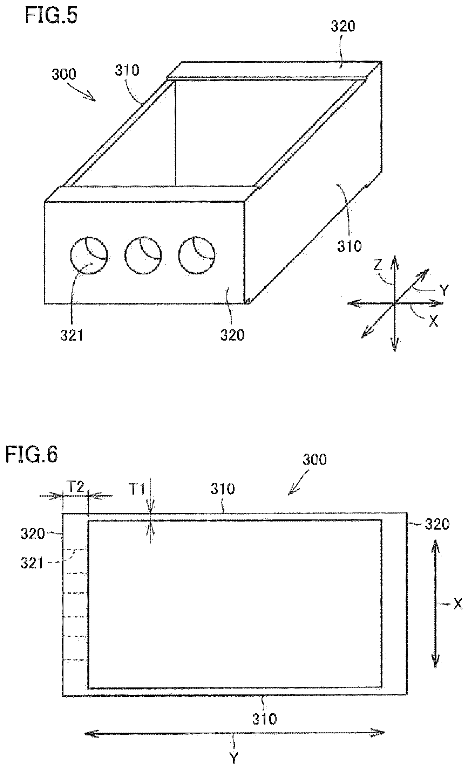

Fig. 5 is a perspective view showing an external appearance of the seamless loop-shaped metal member. Fig. 6 is a plan view showing a configuration of the seamless loop-shaped metal member. As shown in Figs. 5 and 6, seamless loop-shaped metal member 300 has a rectangular loop shape. Specifically, seamless loop-shaped metal member 300 includes: a pair of first side portions 310 extending in the Y axis direction (stacking direction); and a pair of second side portions 320 extending in the width direction (X axis direction) orthogonal to the Y axis direction (stacking direction) to connect the pair of first side portions 310 to each other. Thickness T2 of each of the pair of second side portions 320 is thicker than thickness T1 of each of the pair of first side portions 310.

At least one of the pair of second side portions 320 is provided with hole portions 321 each extending through the at least one of the pair of second side portions 320 in the Y axis direction (stacking direction). In the present embodiment, three hole portions 321 are formed at intervals in the width direction (X axis direction) in second side portion 320 located on one side in the Y axis direction (stacking direction). That is, the plurality of hole portions 321 are formed at intervals in the extension direction of second side portion 320. It should be noted that the number of hole portions 321 formed in second side portion 320 on the one side is not limited to three, and may be one.

Seamless loop-shaped metal member 300 is a loop-shaped member with no ends. Seamless loop-shaped metal member 300 is composed of a metal such as aluminum or an iron/steel material.

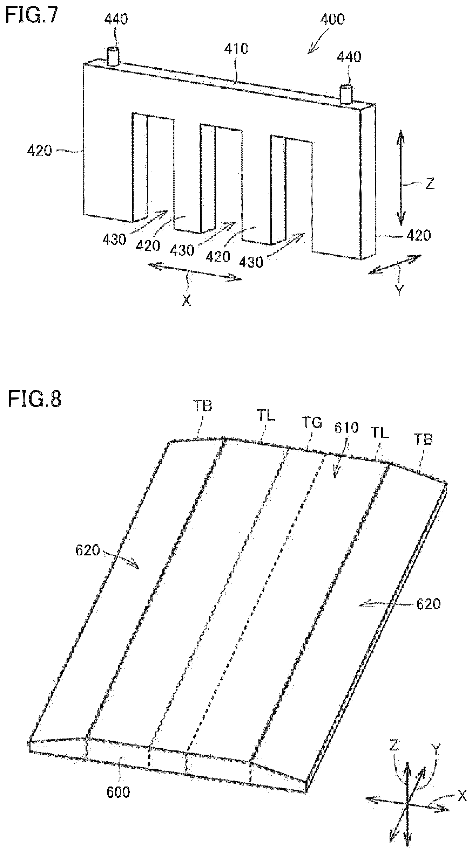

Fig. 7 is a perspective view showing an external appearance of the first spacer. As shown in Figs. 2 and 7, first spacer 400 includes: a first base portion 410 extending in the width direction (X axis direction); and a plurality of first projecting portions 420 projecting from first base portion 410 in an upward/downward direction (Z axis direction). The plurality of first projecting portions 420 are located with spaces 430 being interposed therebetween. In the present embodiment, first spacer 400 includes four first projecting portions 420. It should be noted that the number of first projecting portions 420 is not limited to four, and may be two or more.

Protuberances 440 are formed on the upper surface of first base portion 410. In the present embodiment, two protuberances 440 are disposed at both ends of first base portion 410 in the width direction (X axis direction). It should be noted that the number of protuberances 440 is not limited to two.

First spacer 400 is composed of a resin having insulation property and heat resistance. It should be noted that the material of first spacer 400 is not limited to the resin, and may be a metal such as aluminum or an iron/steel material.

As shown in Fig. 2, bus bar plate 500 has a substantially flat plate shape. In the present embodiment, bus bar plate 500 is folded such that both end portions of bus bar plate 500 in the width direction (X axis direction) are located above the central portion of bus bar plate 500. Bus bar plate 500 is composed of a resin having insulation property and heat resistance.

Fig. 8 is a perspective view showing an external appearance of the top cover. As shown in Figs. 1 and 8, a plurality of functionally divided spaces are formed between top cover 600 and bus bar plate 500.

Specifically, a gas duct area TG serving as a flow path for combustible gas discharged from gas discharge valve 140 is formed at the central portion in the width direction (X axis direction). In the width direction (X axis direction), wiring areas TL in each of which a wiring electrically connected to each of the plurality of power storage cells 100 is disposed are formed beside the both sides of gas duct area TG. Bus bar areas TB in each of which bus bar 700 is disposed are formed on the outer sides with respect to two wiring areas TL in the width direction (X axis direction).

In top cover 600, a top surface 610 located in each of gas duct area TG and wiring areas TL is a flat surface, and top surfaces 620 located in bus bar areas TB are surfaces inclined downward. Top cover 600 is composed of a resin having insulating property and heat resistance.

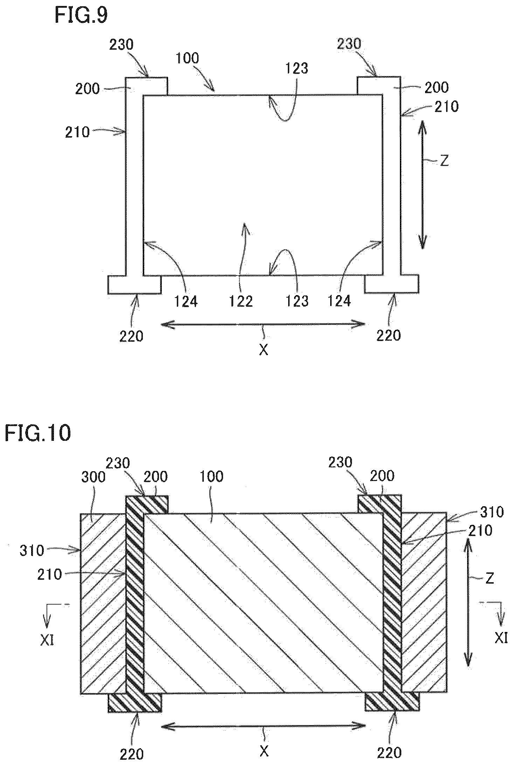

Here, a method of manufacturing the power storage module according to the present embodiment will be described. Fig. 9 is a front view showing a state in which a pair of side plates are fitted on a plurality of power storage cells. As shown in Fig. 9, side plates 200 are fitted on the both sides of the stack of the plurality of power storage cells 100. In this state, the both side surfaces of the stack of the plurality of power storage cells 100, the both end portions of the top surface of the stack of the plurality of power storage cells 100 in the width direction (X axis direction), and the both end portions of the bottom surface of the stack of the plurality of power storage cells 100 in the width direction (X axis direction) are covered with the pair of side plates 200.

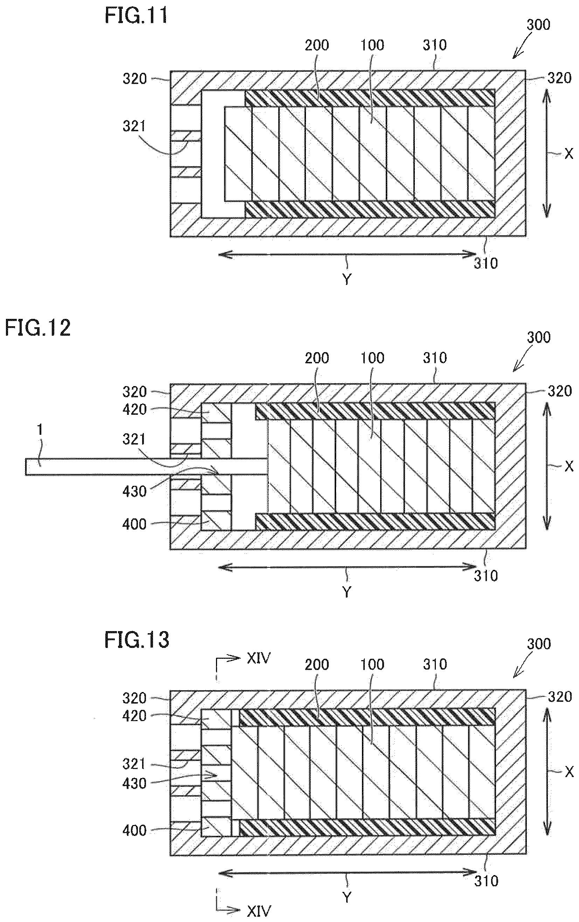

Fig. 10 is a cross sectional view showing a state in which the plurality of power storage cells on which the pair of side plates are fitted are inserted into the seamless loop-shaped metal member. Fig. 11 is a cross sectional view when viewed in a direction of XI-XI of Fig. 10.

As shown in Figs. 10 and 11, the plurality of power storage cells 100 on which the pair of side plates 200 are fitted are inserted into seamless loop-shaped metal member 300. In this state, as shown in Figs. 9 to 11, each of the pair of second side portions 320 of seamless loop-shaped metal member 300 is located in parallel with the pair of long sides 123 of each of power storage cells 100 when viewed in the Y axis direction (stacking direction). As shown in Fig. 10, the pair of first side portions 310 of seamless loop-shaped metal member 300 are placed on bottom plate portions 220 of the pair of side plates 200. As shown in Fig. 11, a space is formed between seamless loop-shaped metal member 300 and the plurality of power storage cells 100 in the Y axis direction (stacking direction).

Fig. 12 is a cross sectional view showing a state in which the plurality of power storage cells are compressed in the stacking direction to insert the first spacer into the space between the seamless loop-shaped metal member and the plurality of power storage cells. As shown in Fig. 12, by inserting a cylinder 1 from the outside into hole portion 321 located at the center in the width direction (X axis direction) among three hole portions 321, the plurality of power storage cells 100 are pressed and compressed between cylinder 1 and the other second side portion 320 of the pair of second side portions 320. Thereafter, first spacer 400 is inserted into the space between seamless loop-shaped metal member 300 and the plurality of power storage cells 100 in the Y axis direction (stacking direction). It should be noted that the plurality of power storage cells 100 may be compressed by inserting cylinder 1 from the outside into each of three hole portions 321.

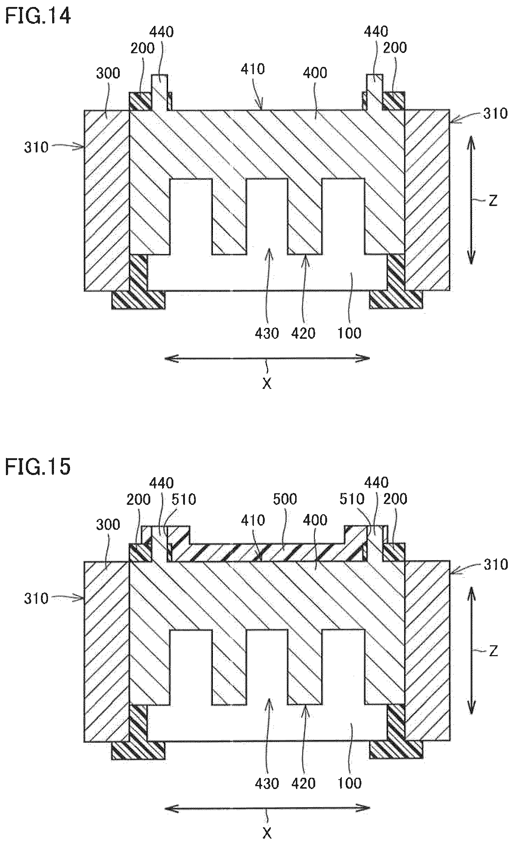

Fig. 13 is a cross sectional view showing a state in which the pressing of the plurality of power storage cells by the cylinder is ceased. Fig. 14 is a cross sectional view when viewed in a direction of arrows of a line XIV-XIV of Fig. 13. As shown in Figs. 13 and 14, when cylinder 1 is pulled out from hole portion 321, the plurality of power storage cells 100 having been compressed are expanded in the Y axis direction (stacking direction) to return to their original shapes, thereby pressing first spacer 400 against one second side portion 320 of the pair of second side portions 320.

As a result, seamless loop-shaped metal member 300 surrounds and holds the plurality of power storage cells 100 in the Y axis direction (stacking direction). First spacer 400 is disposed between seamless loop-shaped metal member 300 and the plurality of power storage cells 100 in the Y axis direction (stacking direction). That is, first spacer 400 is disposed on one side of the stack of the plurality of power storage cells 100 in the Y axis direction (stacking direction). In this state, as shown in Fig. 1, three hole portions 321 of seamless loop-shaped metal member 300 overlap with three spaces 430 of first spacer 400 when viewed in the Y axis direction (stacking direction).

Fig. 15 is a cross sectional view showing a state in which the bus bar plate is placed on the plurality of power storage cells. As shown in Fig. 15, bus bar plate 500 is placed on the plurality of power storage cells 100. Two through hole portions 510 into which protuberances 440 of first spacer 400 are insertable are formed in bus bar plate 500. Bus bar plate 500 is positioned by inserting respective protuberances 440 into two through hole portions 510. Bus bar plate 500 is provided with a wiring for detecting voltage of power storage cell 100 or the like.

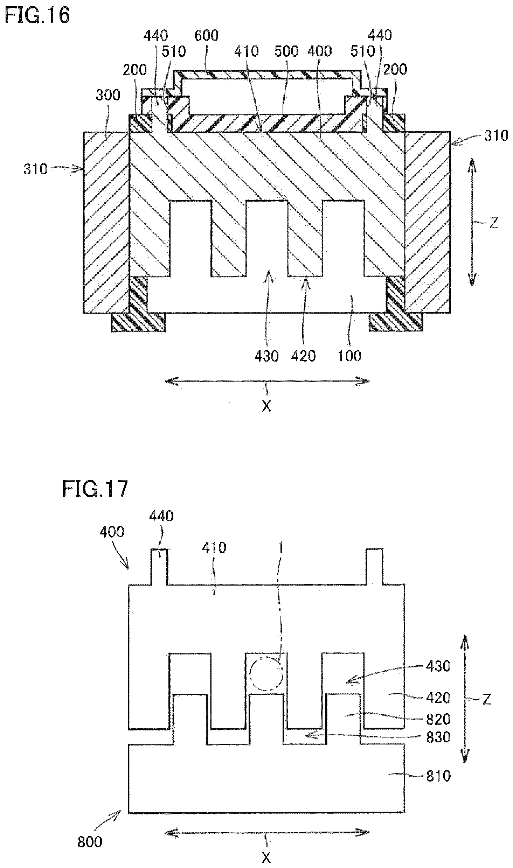

Fig. 16 is a cross sectional view showing a state in which the top cover is placed on the bus bar plate. As shown in Fig. 16, top cover 600 is placed on bus bar plate 500. With the above-described steps, power storage module 10 according to the present embodiment is manufactured.

In power storage module 10 according to the present embodiment, seamless loop-shaped metal member 300 is fitted on the plurality of power storage cells 100 in the stacked state so as to surround and hold the plurality of power storage cells 100 in the Y axis direction (stacking direction). At least one of the pair of second side portions 320 of seamless loop-shaped metal member 300 is provided with hole portions 321 each extending through the at least one of the pair of second side portions 320 in the Y axis direction (stacking direction). Thus, first spacer 400 can be inserted while pressing the plurality of power storage cells 100 by cylinder 1, which is a pressing jig inserted into hole portion 321. Further, since seamless loop-shaped metal member 300, which is a restraint member for the plurality of power storage cells 100, has no connection portion, no connecting operation is required, shear strength of the restraint member can be increased, and the plurality of power storage cells 100 can be restrained with high restraint force being maintained due to first spacer 400 being inserted.

In power storage module 10 according to the present embodiment, hole portions 321 of seamless loop-shaped metal member 300 overlaps with spaces 430 of first spacer 400 when viewed in the Y axis direction (stacking direction). Thus, while pressing the plurality of power storage cells 100 by cylinder 1 inserted into hole portion 321, first spacer 400 can be inserted in the upward/downward direction (Z axis direction) so as not to interfere with cylinder 1.

In power storage module 10 according to the present embodiment, the plurality of hole portions 321 are formed at intervals in the extension direction of second side portions 320. Thus, cylinder 1 can be inserted into each of the plurality of hole portions 321 to stably compress the plurality of power storage cells 100.

In power storage module 10 according to the present embodiment, thickness T2 of each of the pair of second side portions 320 is thicker than thickness T1 of each of the pair of first side portions 310. Thus, first side portion 310 can be made thin and reduced in weight while ensuring rigidity of second side portions 320 that each exert the restraint force on the plurality of power storage cells 100.

Here, a power storage module according to a modification of the present embodiment will be described. Fig. 17 is a diagram showing a relation of engagement between a first spacer and a second spacer of the power storage module according to the modification of the present embodiment.

As shown in Fig. 17, the power storage module according to the modification of the present embodiment further includes a second spacer 800 engaged with first spacer 400. Second spacer 800 includes: a second base portion 810 extending in the width direction (X axis direction); and at least one second projecting portion 820 projecting from second base portion 810 in the upward/downward direction (Z axis direction). In the present modification, second spacer 800 includes three second projecting portions 820. It should be noted that the number of second projecting portions 820 is not limited to three, and may be one or more. Three second projecting portions 820 are located with spaces 830 being interposed therebetween.

Second base portion 810 extends in parallel with the pair of long sides 123 of power storage cell 100. Second projecting portions 820 project in parallel with the pair of short sides 124 from second base portion 810 and are located in spaces 430 of first spacer 400. First projecting portions 420 of first spacer 400 are located in spaces 830 of second spacer 800. As shown in Fig. 17, cylinder 1 is inserted into a portion of space 430 of first spacer 400 in which second projecting portion 820 is not located.

In the power storage module according to the modification of the present embodiment, first spacer 400 and second spacer 800 are provided in the space between the plurality of power storage cells 100 and seamless loop-shaped metal member 300 in the Y axis direction (stacking direction), with the result that the plurality of power storage cells 100 can be stably restrained.

### (Second Embodiment)

Hereinafter, a power storage pack according to a second embodiment will be described with reference to figures. Since the power storage pack according to the second embodiment differs from the power storage module according to the first embodiment in that the restraint member is a case, the same configurations as those of the power storage module according to the first embodiment will not be described repeatedly.

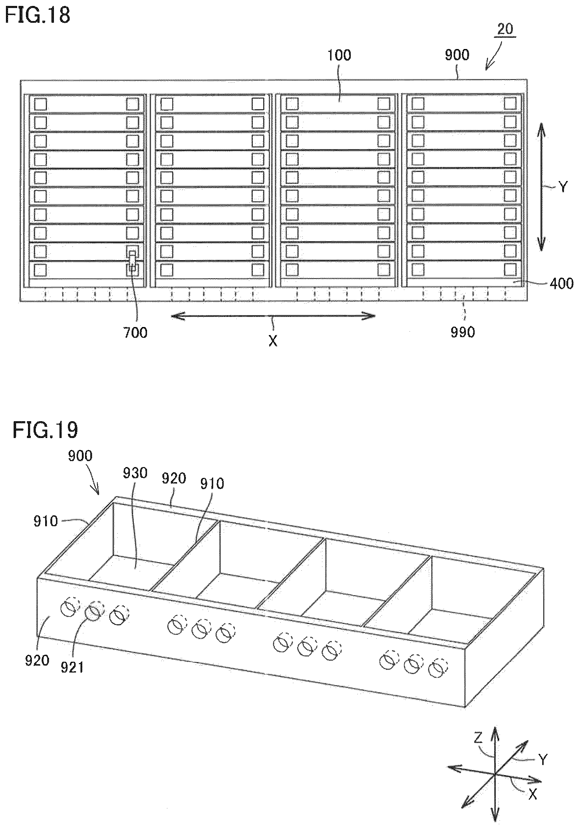

Fig. 18 is a plan view showing a configuration of the power storage pack according to the second embodiment. In Fig. 18, the bus bar plate, the top cover, and the case cover are not shown. As shown in Fig. 18, a power storage pack 20 according to the second embodiment includes a plurality of stacked power storage cells 100, a case 900, and a first spacer 400. Power storage pack 20 further includes a bus bar plate 500, a top cover 600, and a bus bar 700.

As shown in Fig. 18, the plurality of power storage cells 100 are stacked side by side in the Y axis direction. Thus, a stack of power storage cells 100 is formed. A separator (not shown) is interposed between power storage cells 100. The plurality of power storage cells 100 are electrically connected to each other in series or in parallel by bus bar 700.

Fig. 19 is a perspective view showing an external appearance of the case. As shown in Fig. 19, case 900 has four accommodation regions each having a rectangular shape. It should be noted that case 900 may have only one accommodation region. Each accommodation region of case 900 includes: a pair of first side portions 910 extending in the Y axis direction (stacking direction); and a pair of second side portions 920 extending in the width direction (X axis direction) orthogonal to the Y axis direction (stacking direction) to connect the pair of first side portions 910 to each other. The thickness of each of the pair of second side portions 920 is thicker than the thickness of each of the pair of first side portions 910.

At least one of the pair of second side portions 920 is provided with hole portions 921 extending through the at least one of the pair of second side portions 920 in the Y axis direction (stacking direction). In the present embodiment, three hole portions 921 are formed at intervals in the width direction (X axis direction) in second side portion 920 located on one side in the Y axis direction (stacking direction). That is, the plurality of hole portions 921 are formed at intervals in the extension direction of second side portion 920. It should be noted that the number of hole portions 921 formed in second side portion 920 on the one side is not limited to three and may be one.

Case 900 is composed of a metal such as aluminum or an iron/steel material. An adhesive agent for fixing power storage cells 100 is applied on a bottom surface 930 of case 900.

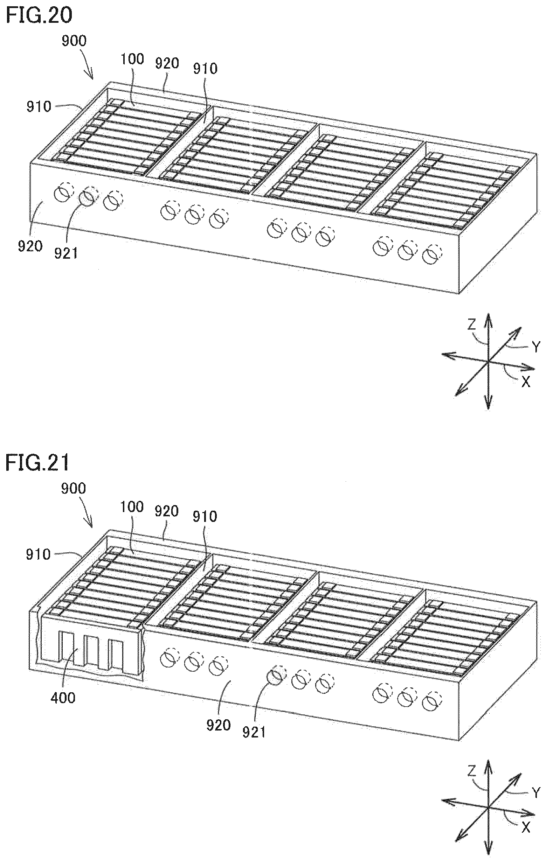

Here, a method of manufacturing the power storage pack according to the present embodiment will be described. Fig. 20 is a perspective view showing a state in which the plurality of power storage cells are accommodated in the case. As shown in Fig. 20, the plurality of stacked power storage cells 100 are accommodated in each accommodation region of case 900. In this state, each of the pair of second side portions 920 of case 900 is located in parallel with the pair of long sides 123 of power storage cell 100 when viewed in the Y axis direction (stacking direction). A space is formed between case 900 and the plurality of power storage cells 100 in the Y axis direction (stacking direction).

Fig. 21 is a cross sectional view showing a state in which the first spacer is inserted into the space between the case and the plurality of power storage cells. As with the first embodiment, by inserting cylinder 1 from the outside into hole portion 921 located at the center in the width direction (X axis direction) among three hole portions 921, the plurality of power storage cells 100 are pressed and compressed between the other second side portion 920 of the pair of second side portions 920 and cylinder 1. Thereafter, first spacer 400 is inserted into the space between case 900 and the plurality of power storage cells 100 in the Y axis direction (stacking direction). It should be noted that the plurality of power storage cells 100 may be compressed by inserting cylinder 1 into each of three hole portions 921 from the outside.

When cylinder 1 is pulled out from hole portion 921, the plurality of power storage cells 100 having been compressed are expanded in the Y axis direction (stacking direction) to return to their original shapes, thereby pressing first spacer 400 against one second side portion 920 of the pair of second side portions 920.

As a result, as shown in Fig. 21, case 900 surrounds and holds the plurality of power storage cells 100 in the Y axis direction (stacking direction). First spacer 400 is disposed between case 900 and the plurality of power storage cells 100 in the Y axis direction (stacking direction). That is, first spacer 400 is disposed on one side of the stack of the plurality of power storage cells 100 in the Y axis direction (stacking direction). After first spacer 400 is disposed, the adhesive agent applied on bottom surface 930 of case 900 is cured to fix the plurality of power storage cells 100 and first spacer 400 to case 900.

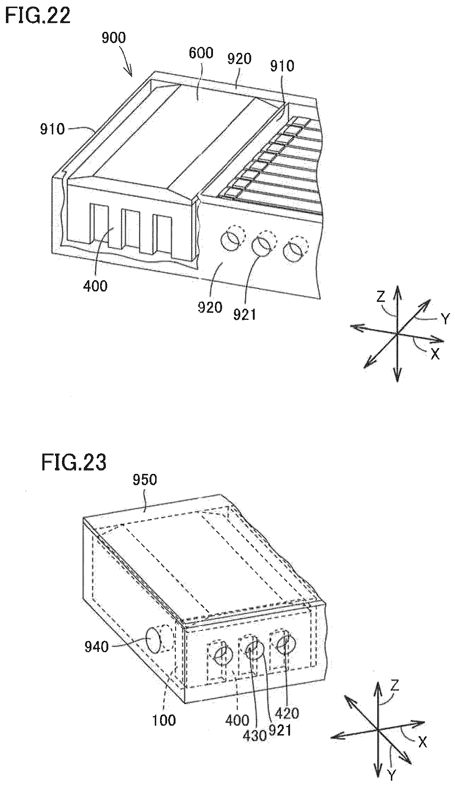

Fig. 22 is a perspective view showing a state in which the bus bar plate and the top cover are placed on the plurality of power storage cells. As shown in Fig. 22, the bus bar plate and top cover 600 are placed on the plurality of power storage cells 100.

Fig. 23 is a perspective view showing a state in which the case cover is attached to the case. As shown in Fig. 23, case cover 950 is attached to case 900. In this state, three hole portions 921 of case 900 overlap with three spaces 430 of first spacer 400 when viewed in the Y axis direction (stacking direction). Case 900 is provided with a connector 940 electrically connected to the plurality of power storage cells 100.

As shown in Fig. 18, three hole portions 921 are closed by respective filling members 990. Thus, case 900 is sealed. Filling members 990 are attached in hole portions 921 by welding, adhesive agent, or the like. Each of filling members 990 is preferably composed of the same material as the material of case 900. In this case, case 900 in the sealed state can be prevented from being unsealed due to a difference in linear expansion coefficient between case 900 and filling member 990.

In power storage pack 20 according to the present embodiment, case 900 is fitted on the plurality of stacked power storage cells 100, and surrounds and holds the plurality of power storage cells 100 in the Y axis direction (stacking direction). At least one of the pair of second side portions 920 of case 900 is provided with hole portions 921 each extending through the at least one of the pair of second side portions 920 of case 900 in the Y axis direction (stacking direction). Thus, first spacer 400 can be inserted while pressing the plurality of power storage cells 100 by cylinder 1, which is a pressing jig inserted into hole portion 921. Further, since first side portions 910 and second side portions 920 of case 900, which is a restraint member for the plurality of power storage cells 100, have no connection portion, no connecting operation is required, shear strength of the restraint member can be increased, and the plurality of power storage cells 100 can be restrained with high restraint force being maintained due to first spacer 400 being inserted.

In power storage pack 20 according to the present embodiment, hole portions 921 of case 900 overlaps with spaces 430 of first spacer 400 when viewed in the Y axis direction (stacking direction). Thus, while pressing the plurality of power storage cells 100 by cylinder 1 inserted into hole portion 921, first spacer 400 can be inserted in the upward/downward direction (Z axis direction) so as not to interfere with cylinder 1.

In power storage module 10 according to the present embodiment, the plurality of hole portions 921 are formed at intervals in the extension direction of second side portions 920. Thus, cylinder 1 can be inserted into each of the plurality of hole portions 921 to stably compress the plurality of power storage cells 100.

In power storage module 10 according to the present embodiment, the thickness of each of the pair of second side portions 920 is thicker than the thickness of each of the pair of first side portions 910. Thus, first side portion 910 can be made thin and reduced in weight while ensuring rigidity of second side portions 920 that each exert the restraint force on the plurality of power storage cells 100.

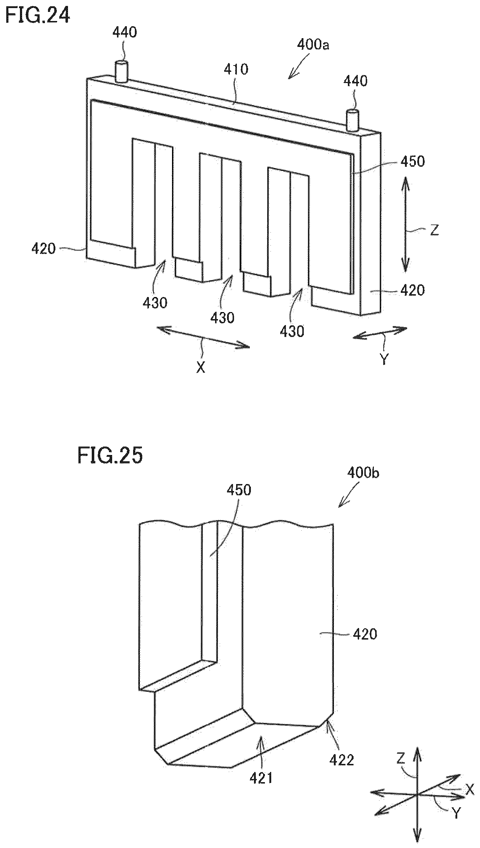

Here, power storage packs according to modifications of the present embodiment will be described. Fig. 24 is a perspective view showing an external appearance of a first spacer of a power storage pack according to a first modification of the present embodiment.

As shown in Fig. 24, a first spacer 400a of the power storage pack according to the first modification of the present embodiment has one surface in the Y axis direction (stacking direction) on which a protruding portion 450 to be brought into abutment with main surface 122 is provided. Protruding portion 450 is smaller than main surface 122. That is, when viewed in the Y axis direction (stacking direction), protruding portion 450 is located on the inner side with respect to the edge of main surface 122. Since first spacer 400a has protruding portion 450, the plurality of power storage cells 100 can be stably restrained with high restraint force.

Fig. 25 is a perspective view showing a configuration of a first projecting portion of a first spacer of a power storage pack according to a second modification of the present embodiment. As shown in Fig. 25, in a first spacer 400b of the power storage pack according to the second modification of the present embodiment, chamfered portions 422 are formed at both ends of a tip surface 421 of a first projecting portion 420 in the Y axis direction (stacking direction). Thus, first spacer 400b can be readily inserted between case 900 and the plurality of power storage cells 100.

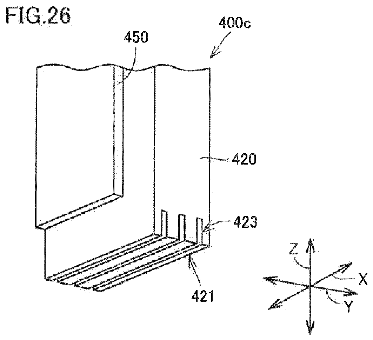

Fig. 26 is a perspective view showing a configuration of a first projecting portion of a first spacer of a power storage pack according to a third modification of the present embodiment. As shown in Fig. 26, in a first spacer 400c of the power storage pack according to the third modification of the present embodiment, groove portions 423 extending in the width direction (X axis direction) are formed in tip surface 421 of first projecting portion 420. Thus, an adhesive agent applied on bottom surface 930 of case 900 can be permitted to flow through groove portions 423 to outside of first spacer 400c in the width direction (X axis direction), so that first spacer 400c can be suppressed from being raised by the adhesive agent.

It should be noted that groove portions 423 may extend in the Y axis direction (stacking direction). In this case, resistance force applied to first spacer 400c from the adhesive agent when the plurality of power storage cells 100 are compressed and expanded can be reduced.

In each of the configurations of the embodiment, configurations that can be combined with each other may be combined with each other.

Although the embodiments of the present invention have been described and illustrated in detail, it is clearly understood that the same is by way of illustration and example only and is not to be taken by way of limitation, the scope of the present invention being defined by the appended claims.

## Claims

1. A power storage module comprising:
a plurality of stacked power storage cells (100);
a seamless loop-shaped metal member (300) that surrounds and holds the plurality of power storage cells (100) in a stacking direction;
a first spacer (400) disposed between the seamless loop-shaped metal member (300) and the plurality of power storage cells (100) in the stacking direction;
a bus bar plate (500); and
a top cover (600); wherein
the seamless loop-shaped metal member (300) includes a pair of first side portions (310) extending in the stacking direction, and a pair of second side portions (320) extending in a direction orthogonal to the stacking direction to connect the pair of first side portions (310) to each other,
each of the plurality of power storage cells (100) has a main surface (122) having a rectangular shape constituted of a pair of long sides (123) and a pair of short sides (124) when viewed in the stacking direction,
each of the pair of second side portions (320) is located in parallel with the pair of long sides (123) when viewed in the stacking direction, and
at least one of the pair of second side portions (320) is provided with a hole portion (321) that extends through the at least one of the pair of second side portions (320) in the stacking direction, wherein
the first spacer (400) includes a first base portion (410) extending in parallel with the pair of long sides (123) and a plurality of first projecting portions (420) projecting from the first base portion (410) in parallel with the pair of short sides (124),
the plurality of first projecting portions (420) is located with a space (430) being interposed between the plurality of first projecting portions (420), and
the hole portion (321) overlaps with the space (430) when viewed in the stacking direction,
protuberances (440) are formed on the upper surface of the first base portion (410);
a plurality of functionally divided spaces is formed between the top cover (600) and the bus bar plate (500);
the bus bar plate (500) is placed on the plurality of power storage cells (100) and is positioned by inserting respective protuberances (440) into through hole portions (510); and
the top cover (600) is placed on the bus bar plate (50).

2. The power storage module according to claim 1, further comprising a second spacer (800) engaged with the first spacer (400), wherein
the second spacer (800) includes a second base portion (810) extending in parallel with the pair of long sides (123), and at least one second projecting portion (820) projecting from the second base portion (810) in parallel with the pair of short sides (124) and located in the space (430).

3. The power storage module according to claim 1 or 2, wherein a plurality of the hole portions (321) are formed at intervals in an extension direction of the second side portions (320).

4. The power storage module according to any one of claims 1 to 3, wherein a thickness of each of the pair of second side portions (320) is thicker than a thickness of each of the pair of first side portions (310).

## Patentansprüche

1. Leistungsspeichermodul, aufweisend:
eine Vielzahl von gestapelten Leistungsspeicherzellen (100);
ein nahtloses, schlaufenförmiges Metallelement (300), welches die Vielzahl von Leistungsspeicherzellen (100) in einer Stapelrichtung umgibt und hält;
einen ersten Abstandhalter (400), der in der Stapelrichtung zwischen dem nahtlosen, schlaufenförmigen Metallelement (300) und der Vielzahl von Leistungsspeicherzellen (100) angeordnet ist;
eine Sammelschienenplatte (500); und
eine obere Abdeckung (600); wobei
das nahtlose, schlaufenförmige Metallelement (300) ein Paar von ersten Seitenabschnitten (310), die sich in der Stapelrichtung erstrecken, und ein Paar von zweiten Seitenabschnitten (320) umfasst, die sich in einer zu der Stapelrichtung orthogonalen Richtung erstrecken, um das Paar von ersten Seitenabschnitten (310) miteinander zu verbinden,
jede von der Vielzahl von Leistungsspeicherzellen (100) eine Hauptoberfläche (122) aufweist, die in Stapelrichtung betrachtet eine rechteckige Form aufweist, die aus einem Paar von langen Seiten (123) und einem Paar von kurzen Seiten (124) besteht,
jeder von dem Paar von zweiten Seitenabschnitten (320) in Stapelrichtung betrachtet parallel zu dem Paar von langen Seiten (123) angeordnet ist, und
mindestens einer von dem Paar von zweiten Seitenabschnitten (320) mit einem Lochabschnitt (321) versehen ist, der sich in Stapelrichtung durch den mindestens einen von dem Paar von zweiten Seitenabschnitten (320) erstreckt,
wobei der erste Abstandshalter (400) einen ersten Basisabschnitt (410), der sich parallel zu dem Paar von langen Seiten (123) erstreckt, und eine Vielzahl von ersten vorstehenden Abschnitten (420) umfasst, die von dem ersten Basisabschnitt (410) parallel zu dem Paar von kurzen Seiten (124) vorstehen,
die Vielzahl von ersten vorstehenden Abschnitten (420) so angeordnet ist, dass zwischen der Vielzahl von ersten vorstehenden Abschnitten (420) ein Raum (430) angeordnet ist, und
der Lochabschnitt (321) in Stapelrichtung betrachtet den Raum (430) überlappt,
auf der oberen Oberfläche des ersten Basisabschnitts (410) Vorsprünge (440) ausgebildet sind;
zwischen der oberen Abdeckung (600) und der Sammelschienenplatte (500) eine Vielzahl von funktional unterteilten Räumen ausgebildet ist;
die Sammelschienenplatte (500) auf der Vielzahl von Leistungsspeicherzellen (100) angeordnet ist und durch Einfügen jeweiliger Vorsprünge (440) in Durchgangslochabschnitte (510) positioniert ist; und
die obere Abdeckung (600) auf der Sammelschienenplatte (50) angeordnet ist.

2. Leistungsspeichermodul nach Anspruch 1, ferner aufweisend einen zweiten Abstandhalter (800), der mit dem ersten Abstandhalter (400) in Eingriff steht, wobei
der zweite Abstandshalter (800) einen zweiten Basisabschnitt (810), der sich parallel zu dem Paar von langen Seiten (123) erstreckt, und mindestens einen zweiten vorstehenden Abschnitt (820) umfasst, der von dem zweiten Basisabschnitt (810) parallel zu dem Paar von kurzen Seiten (124) vorsteht und sich in dem Raum (430) befindet.

3. Leistungsspeichermodul nach Anspruch 1 oder 2, wobei eine Vielzahl der Lochabschnitte (321) in einer Erstreckungsrichtung der zweiten Seitenabschnitte (320) voneinander beabstandet ausgebildet ist.

4. Leistungsspeichermodul nach einem der Ansprüche 1 bis 3, wobei eine Dicke von jedem von dem Paar von zweiten Seitenabschnitten (320) größer ist als eine Dicke von jedem von dem Paar von ersten Seitenabschnitten (310).

## Revendications

1. Un module de stockage d'énergie comprenant :
une pluralité de cellules de stockage d'énergie (100) empilées ;
un élément métallique en forme de boucle sans soudure (300) qui entoure et maintient la pluralité de cellules de stockage d'énergie (100) dans une direction d'empilement ;
une première entretoise (400) disposée entre l'élément métallique en forme de boucle sans soudure (300) et la pluralité de cellules de stockage d'énergie (100) dans la direction d'empilement ;
une plaque de barres omnibus (500) ; et
un couvercle supérieur (600) ; dans lequel
l'élément métallique en forme de boucle sans soudure (300) comprend une paire de premières parties latérales (310) s'étendant dans la direction d'empilement, et une paire de secondes parties latérales (320) s'étendant dans une direction orthogonale à la direction d'empilement pour relier entre elles la paire de premières parties latérales (310),
chacune des multiples cellules de stockage d'énergie (100) présente une surface principale (122) de forme rectangulaire constituée d'une paire de côtés longs (123) et d'une paire de côtés courts (124) lorsqu'on regarde dans la direction d'empilement,
chacune de la paire de secondes parties latérales (320) est située parallèlement à la paire de côtés longs (123) lorsqu'on regarde dans la direction d'empilement, et
au moins l'une de la paire de secondes parties latérales (320) est pourvue d'une partie perforée (321) qui s'étend à travers ladite au moins une de la paire de secondes parties latérales (320) dans la direction d'empilement, dans lequel
la première entretoise (400) comprend une première partie de base (410) s'étendant parallèlement à la paire de côtés longs (123) et une pluralité de premières parties en saillie (420) faisant saillie à partir de la première partie de base (410) parallèlement à la paire de côtés courts (124),
la pluralité de premières parties en saillie (420) est disposée de telle sorte qu'un espace (430) soit intercalé entre lesdites premières parties en saillie (420), et
la partie perforée (321) recouvre l'espace (430) lorsqu'on observe dans la direction d'empilement,
des saillies (440) sont formées sur la surface supérieure de la première partie de base (410) ;
une pluralité d'espaces fonctionnellement divisés est formée entre le couvercle supérieur (600) et la plaque de barres omnibus (500) ;
la plaque de barres omnibus (500) est placée sur la pluralité de cellules de stockage d'énergie (100) et est positionnée en insérant les saillies (440) respectives dans des parties de trous traversants (510) ; et
le couvercle supérieur (600) est placé sur la plaque de barres omnibus (50).

2. Le module de stockage d'énergie selon la revendication 1, comprenant en outre une deuxième entretoise (800) en prise avec la première entretoise (400), dans lequel
la deuxième entretoise (800) comprend une deuxième partie de base (810) s'étendant parallèlement à la paire de côtés longs (123), et au moins une deuxième partie en saillie (820) faisant saillie à partir de la deuxième partie de base (810) parallèlement à la paire de côtés courts (124) et située dans l'espace (430).

3. Le module de stockage d'énergie selon la revendication 1 ou 2, dans lequel une pluralité de parties perforées (321) sont formées à intervalles réguliers dans le sens d'extension des secondes parties latérales (320).

4. Le module de stockage d'énergie selon l'une quelconque des revendications 1 à 3, dans lequel l'épaisseur de chacune des deux secondes parties latérales (320) est supérieure à celle de chacune des deux premières parties latérales (310).
